# EUROPEAN PATENT APPLICATION

(11) **EP 4 659 936 A2**
(43) Date of publication of application: **10.12.2025**
(21) Application number: 25180715.2
(22) Date of filing: 04.06.2025
(51) Int. Cl.: B29C 64/118, B29C 64/245, B33Y 10/00, B33Y 30/00, B29C 64/40, B33Y 40/20, B29C 64/30, B22F 12/30, B29C 64/35

(54) **PRINTING PLATFORM**

(30) Priority: 05.06.2024 BE 202405326
(71) Applicant: Bulcke Technical Printing BV, 9850 Deinze (BE)
(72) Inventor: BULCKE, Pieter-Jan, 8460 Oudenburg (BE)
(74) Representative: Hostens, Veerle

(57) **Abstract**

The present disclosure comprises a printing platform (1) for producing an assembly (9) of a build plate (3) and an object (2), wherein the printing platform (1) comprises said build plate (3), wherein said build plate (3) comprises a holding surface (31) and a support surface (32) and comprises cavities (5) which extend through the build plate (3) and are each provided with access openings (51) in the holding surface (31), in order to fill the cavity (5) with unhardened extruded material (4) via said access openings (51), and are provided with a securing edge (52), and in that the printing platform (1) further comprises a counterpart element (6), wherein the printing platform (1) is provided so as to fit said counterpart element (6) to the support surface (32) in order to at least partially close an exit opening (53) from the cavity (5) in the support surface (32) such that the unhardened extruded material (4) in the cavity (5) hooks behind the securing edge (52) and forms barbs (7).

## Description

The present invention relates to a printing platform for producing an assembly of a build plate and an object, wherein the printing platform comprises said build plate, wherein said build plate:
- comprises a holding surface for adding layers of extruded material thereon via extrusion in order to form the object;
- and comprises cavities which extend through the build plate, wherein each cavity is provided with one or more access openings in the holding surface, in order, when adding layers of extruded material onto the holding surface, to fill the cavity with unhardened extruded material via said one or more access openings.

In addition, the present invention relates to a production facility for producing an object which is manufactured from layers of extruded material, wherein the production facility comprises such a printing platform. The present invention also relates to a method for producing such an assembly of a build plate and an object, and to a method for producing such an object.

The present invention relates more specifically to printing platforms for 3D printing with the aid of an extrusion process. In said process, solid material can be melted to form liquid material, or liquid material can be supplied, and then applied to a print plate or build plate of a printing platform with the aid of a nozzle extruder. Moving the extruder and/or the build plate in a directed manner allows the desired shape of an object to be applied, layer by layer, via extrusion. Due to the fact that the liquid material hardens after application of each layer of extruded material, it is thus possible to build up the desired shape on the build plate.

Here, there are various methods for supplying material, such as what is known as fused filament fabrication (FFF) printing in which the material is supplied in the form of a filament thread and in which the molten thread is applied in layers one on top of the other. An alternative, known method is what is known as fused granular fabrication (FGF) printing in which the material is supplied in the form of granular material, said molten granular material being applied in layers one on top of the other. FGF is preferred when printing objects in large format because the granular materials can be melted much more rapidly than the filament thread, as a result of which it is possible to add much more extruded material within the same time period and thus to form larger objects.

A known problem in 3D printing by means of extrusion is that the object formed from extruded material can warp due to thermal expansion of the material. After all, each layer of extruded material will shrink after solidification. Each new layer of extruded material causes additional tensile stress on the top side of the object with respect to the previous layer that has already shrunk. This uneven cooling can thus cause warpage of the object. Depending on the production requirements, this warpage may be crucial and ensure that the print of the object is considered to be not acceptable. When printing objects in large format, this adverse effect increases because there is much more extruded material, meaning a greater force is necessary to compensate for buckling. After all, this force is dependent on the quantity of material of the object and thus on the volume of the object. Depending on the choice of material for the extruded material, this effect may be enhanced or weakened.

The known solution to this problem, in order to ensure that an object is printed correctly, is to bond the first layer or the first layers of extruded material to the build plate in order to ensure that the object is warped as little as possible. Greater bonding or adhesion will ensure that the object is deformed to a lesser extent. The drawback thereof is that with greater adhesion it becomes more difficult to detach said first layer or said first layers from the build plate again without damaging the bottom of the object or the build plate. In addition, the great bonding often makes it necessary to work with clamps, such as a wooden clamping block, which retain the print during post-processing.

The various printing platforms known from the prior art use various techniques which try to find a good balance between, on the one hand, as good as possible a bond, and, on the other hand, as little damage as possible to the object or the build plate. These techniques may make use of chemical adhesion such as adhesive or coating, but also of mechanical adhesion such as the manual clamping of the bottom layers. The use of mechanical fastening has in this case the additional advantage that the build plate is suitable for more types of extruded material, whereas the choice of material is usually more limited in the case of chemical fastening.

Another example of a specific mechanical solution to this problem is the use of a build plate with oblique fins, the extruded material being able to run partly between said oblique fins, ensuring that the extruded material hooks in the build plate during the solidification. After printing, all of said fins are tilted in one movement in order to thus break the bond and detach the object from the build plate. This solution makes it possible to detach the extruded material very rapidly, but the bonding in the oblique fins is insufficient to avoid warpage, especially in large-format applications. Moreover, the material which has run between the oblique fins provides a jagged bottom side of the object, as a result of which a lot of post-processing still is required if a smooth bottom side of the object is desired. In addition, making a build plate with tiltable oblique fins is rather complex.

An improvement on this is provided by the use of a build plate with a grid of cylindrical cavities which can be filled with extruded material. The first layers of extruded material will partially run into the cavities and thus create a bond between the build plate and the object. After printing, the object is separated from the build plate by pushing a rod through each cavity in order to thus detach the bond. This solution offers greater bonding than the build plate with oblique fins, but is still insufficient to avoid warpage in large-format applications. Here, too, there is additionally a problem regarding the smoothness of the object, since the parts of extruded material, which in the cavities ensure the bond, still hang on the build plate after the pushing-out operation, as a result of which a lot of post-processing still is also required here in order to obtain a smooth bottom side of the object.

The object of the invention is to provide such a printing platform, wherein the mechanical bond between the build plate and the object, manufactured from layers of extruded material, is stronger than when using the printing platforms mentioned above in order to further reduce the risk of warpage. Moreover, it is also important for the mechanical bond to be provided in such a way that the bond can be detached again with as little damage as possible to the object, wherein as little post-processing as possible is required to make the bottom of the object smooth and wherein no clamps are required for this post-processing.

Said object of the invention is achieved by providing a printing platform for producing an assembly of a build plate and an object, wherein the printing platform comprises said build plate, wherein said build plate:
- comprises a holding surface for adding layers of extruded material thereon via extrusion in order to form the object;
- and comprises cavities which extend through the build plate, wherein each cavity is provided with
   ∘ one or more access openings in the holding surface, in order, when adding layers of extruded material onto the holding surface, to fill the cavity with unhardened extruded material via said one or more access openings; and
   ∘ a securing edge;
and wherein the printing platform further comprises a counterpart element, wherein the printing platform is provided so as to fit said counterpart element to a support surface of the build plate, on the opposite side from the holding surface, in order to at least partially close an exit opening from the cavity in the support surface such that the unhardened extruded material in the cavity hooks behind the securing edge and forms barbs.

Said assembly of a build plate and an object has to subsequently be separated in order to produce an object manufactured from layers of extruded material.

By forming barbs of the extruded material behind the securing edges in the cavities, it is possible to provide a much stronger mechanical bond between the first extruded layers and the build plate. This bond is so strong that the mentioned prior art means for detaching the bond, such as the tilting or the pushing of rods through the cavities, are not successful in separating the build plate and the object. This strength ensures that the object is subjected to much less warpage than in a method according to the prior art, as a result of which it is even possible to use extruded materials which have poor adhesion and/or a strong tendency towards buckling.

The printing platform is preferably also provided so as to remove the counterpart element from the support surface of the build plate again after the barbs have been formed, such that the access to the exit openings from the cavities is no longer partially or completely closed. Due to the fact that the access to the exit openings and thus to the barbs is freely accessible, it is possible to subsequently detach said barbs via the cavities so as to damage the object as little as possible. Preferably, the counterpart element is provided so as to be fitted to and removed from the support surface of the build plate automatically, such as with the aid of a lifting system, but this may alternatively also be effected manually.

Preferably, the printing platform is provided so as to produce assemblies with objects in large format, but the printing platform may alternatively or additionally also be provided so as to produce assemblies with objects in a smaller format. The printing platform is further preferably provided with a nozzle extruder in order to apply the extruded material to the build plate.

Preferably, the counterpart element comprises projections, wherein each projection is provided so as to extend, when the counterpart element is fitted to the support surface, in a said cavity in order to guide the unhardened extruded material to behind the securing edge.

Further preferably, each projection comprises one or more apexes which, when the counterpart element is fitted to the support surface, in said cavity are provided closest to a said access opening to the cavity, wherein said apexes extend up to a distance from said access opening. Due to the fact that the apexes extend up to a distance from the access openings, it is possible for the access openings to be narrowed to a greater extent, as a result of which the barbs are stronger and less extruded material is required to produce the assembly of the object and the build plate. In a preferred embodiment, each projection comprises two smooth surfaces which form a gable roof shape towards the apexes.

Preferably, each cavity, as seen in cross section parallel to the holding surface, has at least one dimension which decreases from on the support surface to on the holding surface. Due to the fact that this narrows the cavities towards the access openings, the barbs formed will be stronger and/or more easily formed. Further preferably, the dimension or dimensions which decrease from on the support surface to on the holding surface are selected such that the extruded material forms conical barbs in the cavity.

In a preferred embodiment, the cavities are also of slot-like design. This allows the further detachment of the object and the build plate to be carried out more rapidly. The combination of slot-like cavities with a counterpart element having gable roof-shaped projections is particularly preferred.

The build plate is further preferably removable from the printing platform. This allows the build plate, with or without the object, to be removed from the printing platform and possibly a second build plate without object to be placed in the printing platform. In the case of the printing platforms known from the prior art, after printing, the object in the printing platform is detached from the build plate and the build plate in the printing platform has to subsequently be cleaned before a new print can start. By now making the build plate removable from the printing platform, it is possible to already begin a subsequent print, while the assembly of the build plate and the object is detached at another location. This also makes it possible to clean a build plate while the printing platform is printing on a second build plate, ensuring much more rapid printing times. Preferably, the build plate is removable from and fittable to the printing platform automatically, but this may alternatively also be effected manually.

The counterpart element may consist of one or more components which are fittable separately or together. Preferably, the counterpart element is designed as a counterpart plate.

The object of the invention is also achieved by providing a production facility for producing an object which is manufactured from layers of extruded material, wherein the production facility comprises a printing platform, further comprises one or more treatment means in order to further treat the assembly of the build plate and the object, and wherein the treatment means comprise a removal tool in order to remove the extruded material, after hardening, from each cavity such that the barbs are weakened or removed.

Said treatment means may comprise a hand tool, but may alternatively also comprise an apparatus or a device. The printing platform itself may also comprise treatment means. Said treatment means, including the removal tools, may operate manually or automatically.

By using the movement of the removal tool in the cavity to weaken or remove the barbs, it is possible to detach the object from the build plate without the object being damaged, and it is also possible to ensure that the bottom of the object is much smoother than in the case of the known printing platforms, such that fewer treatment means are required for finishing the object. The build plate itself is also damaged to a lesser extent as a result of this controlled removal. In addition, it is not necessary here to retain the print using clamps during the post-processing. Preferably, the treatment means may also further treat the object after it has been detached from the build plate. Said treatment means for the further finishing of the object may comprise a planing tool or cutting tool or chiselling tool in order to plane, cut or chisel away the residual material that remains after the weakening of the barbs.

In an extremely preferred embodiment, the removal tool comprises a milling tool. In this case, the milling tool may be provided so as to perform milling automatically or manually. As an alternative, the removal tool may also comprise a drilling tool or melting tool.

In a preferred embodiment, the treatment means further comprise a scanning tool in order to scan the build plate, the production facility further comprises a processing unit in order to determine a reference coordinate system on the basis of the scanned build plate and the production facility also comprises a control unit for controlling the removal tool on the basis of said reference coordinate system. The build plate may be scanned with or without the object. If the build plate is scanned with the object by the scanning tool, the scan of the build plate may more specifically be used to determine the reference coordinate system and the scan of the object may more specifically be used to control the removal tool, with the aid of the aforementioned reference coordinate system. Particularly when use is made of one or more treatment means which operate automatically, it is necessary to use such a scanning tool because the build plate bends during the printing process due to the thermal expansion and shrinkage stresses of the object. The reference coordinate system can then be used to ensure that the removal tool ensures that the object detaches from the build plate with a fine margin such that the object itself is not damaged. The control unit may also control other treatment means.

Preferably, the removal tool is provided so as to remove the extruded material, after hardening, in each cavity by the removal tool being moved in the cavity from the exit opening to the one or more access openings such that the barbs are weakened or removed and the object detaches from the build plate. As an alternative, but less preferred, it is also possible to use a removal tool which does not have to be moved in the cavity from the exit opening to the access opening(s).

Preferably, the production facility further comprises limiting means in order to limit the movement of the removal tool in the cavities. Said limiting means ensure, individually or in combination with a reference coordinate system, that the removal tool is limited to a determined distance from the object, such that the object is not damaged. Preferably, the production facility further comprises compensation means. Said compensation means ensure that the treatment means, including the removal tool, are adapted to the bending of the build plate. More specifically, the limiting means preferably comprise a stop which is provided on the removal tool so as to strike against the build plate during the movement of the removal tool, in order to limit the movement of the removal tool in each cavity. Such a stop is also an example of a compensation means and will ensure that the bending of the build plate due to the thermal expansion and shrinkage stresses of the object is continuously compensated.

In a preferred embodiment, the production facility further comprises conveying means in order to move the build plate from the printing platform to a treatment platform which comprises one or more aforementioned treatment means. It is thus possible to more easily move the assembly from the build plate and it is also possible to move much heavier assemblies. In addition, this also makes it possible to ensure that the print plate more accurately remains in the same position after movement. Such conveying means may comprise, for example, gripping hooks, wheels or conveyor belts. Preferably, the build plate is adapted so as to be moved by said conveying means.

The object of the invention is additionally also achieved by providing a method for producing an assembly of a build plate and an object which is manufactured via extrusion through the addition of layers of extruded material, wherein the assembly is produced with the aid of a printing platform. In this case, the extruded material is preferably supplied via the FGF method, especially when being used to produce assemblies with objects in large format, but it may alternatively also be supplied via the FFF method.

The object of the invention is lastly also achieved by providing a method for producing an object which is manufactured from layers of extruded material, wherein said method comprises:
a. producing an assembly of a build plate and an object, by the method for producing an assembly of a build plate and an object;
b. detaching the object from the build plate in a production facility, by weakening or removing the barbs via the exit openings with the aid of the removal tool.

Preferably, the method further comprises a step in which said treatment means treat the assembly of a build plate and an object and/or a step in which treatment means treat the object after the object has been detached from the build plate. Preferably, said method further comprises:
c. scanning the build plate;
d. determining a reference coordinate system on the basis of said scan;
wherein, in step b, the object is detached by controlling the removal tool on the basis of said reference coordinate system.

Preferably, the steps in the methods described above are carried out automatically, but they may alternatively also be carried out manually.

The present invention will now be explained in more detail by means of the following detailed description of some preferred embodiments of a printing platform according to the present invention. The sole aim of this description is to give illustrative examples and to indicate further advantages and features of the present invention, and can therefore not be interpreted as a limitation of the area of application of the invention or of the patent rights defined in the claims.

Reference numerals are used in this detailed description to refer to the attached drawings, in which:
- Figure 1 depicts a perspective view of a part of an embodiment of a printing platform, cross-sectioned through multiple cavities;
- Figure 2 depicts the part of the embodiment of the printing platform from Figure 1 in cross section;
- Figure 3 depicts a perspective view of a part of an embodiment of a treatment platform, with the build plate of the printing platform from Figure 1 cross-sectioned through multiple cavities;
- Figure 4 depicts a top view of a part of the embodiment of the printing platform from Figure 1;
- Figure 5 depicts a perspective view of an embodiment of an assembly of a build plate and an object;
- Figure 6 depicts a perspective view of an embodiment of a conveying means with a build plate;
- Figure 7 schematically depicts an embodiment of a production facility; and
- Figure 8 depicts a cross section of a part of an alternative embodiment of a printing platform.

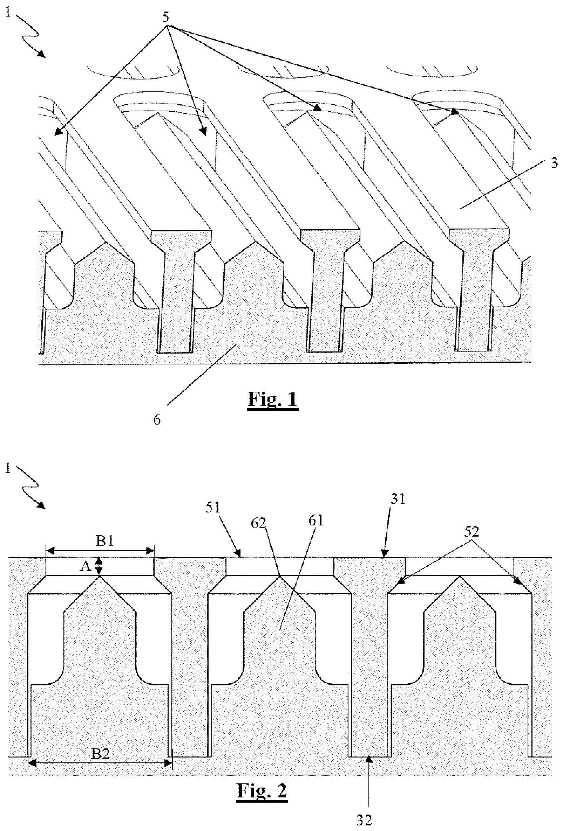

Figures 1, 2 and 4 show parts of an embodiment of a printing platform 1 for producing an assembly 9 of a build plate 3 and an object 2. The build plate 3 comprises multiple cavities 5 which are arranged in a grid and are of slot-like design. As an alternative, said cavities 5 may also be arranged in an alternative manner and/or be designed in an alternative shape, such as circular cavities 5 which are positioned alternately. The build plate 3 comprises on the top a holding surface 31 suitable for adding layers of extruded material 4 thereon via extrusion, and comprises on the bottom a support surface 32 located on the opposite side from the holding surface 31. The cavities 5 extend through the build plate 3 and are provided with an access opening 51 in the holding surface 31, a securing edge 52, and an exit opening 53 in the support surface 32 of the build plate 3. The cavities 5 may alternatively have multiple access openings 51 to the same cavity 5. The cavities 5 are each suitable for being filled with unhardened extruded material 4 via said one or more access openings 51 to the cavity 5.

The build plate 3 preferably has a surface area that is sufficiently great to support a large-scale object 2, more specifically greater than 9 m², but may alternatively also be smaller. The ratio of the surface area of the cavities 5 to the surface area of the build plate 3 is preferably as great as possible such that the assembly 9 is much more homogeneous. The build plate 3 is preferably manufactured from a metal, such as, more specifically, aluminium or steel, and further preferably has a cross section of approximately 10 mm, such that the build plate 3 is sufficiently strong to be able to bear the extruded material 4. These materials preferably have no chemical reaction with the extruded material 4 and can preferably withstand the high temperatures of the extruded material 4 without deforming.

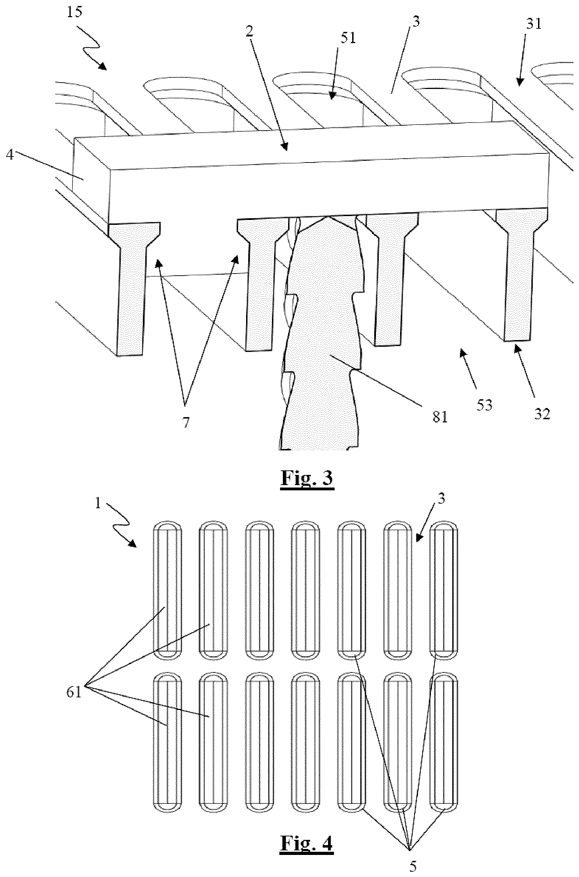

The printing platform 1 further comprises a counterpart element 6 which is preferably designed as a counterpart plate 6. As an alternative, the counterpart element 6 may also for example be designed as a collection of projections. As visible in Figures 1 and 2, said counterpart element 6 can be fitted to the support surface 32 in order to at least partially close the exit openings 53 from the cavities 5. Figure 2 shows how the counterpart element 6 is fitted against the support surface 32 such that the exit openings 53 are completely closed, but alternatively the counterpart element 6 may be fitted up to a determined distance from the support surface 32 and/or the counterpart element 6 may be provided with openings such that the exit openings 53 are only partially, rather than completely, closed. As can be seen in Figure 3, said counterpart element 6 guides the extruded material 4 in the cavity 5 so as to hook behind the securing edge 52 and forms barbs 7. The counterpart element 6 is preferably manufactured from the same material as the build plate 3, but may alternatively also be manufactured from an alternative material. If the counterpart element 6 is designed as a counterpart plate 6, said counterpart plate 6 preferably has a surface area which is approximately as large as the build plate 3.

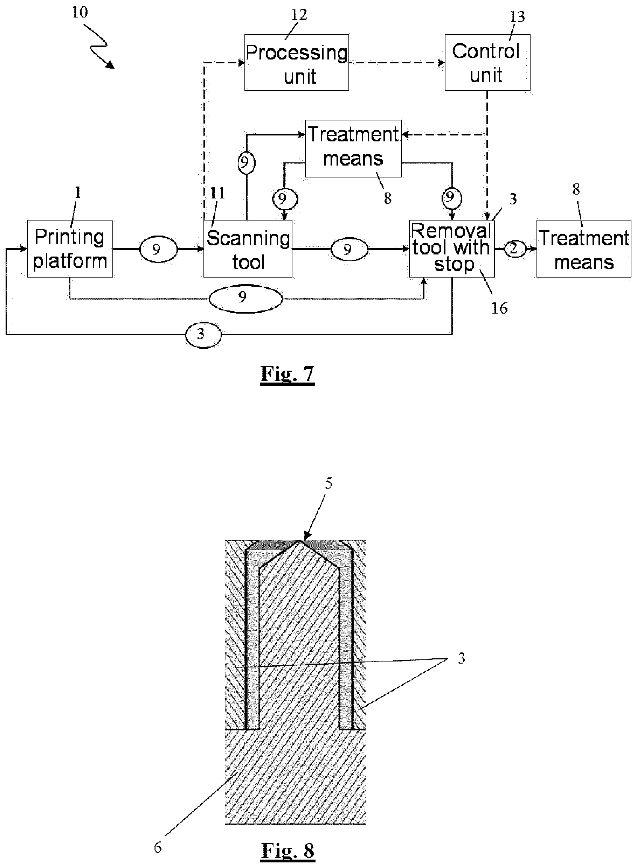

Figure 8 shows an alternative embodiment in which the counterpart element 6, when fitted in the cavity 5, leaves open more space between the counterpart element 6 and the build plate 3. This extra space in the cavity 5, through which the extruded material 4 flows, means there is less risk of the extruded material 4 causing a blocking bond between the build plate 3 and the counterpart element 6.

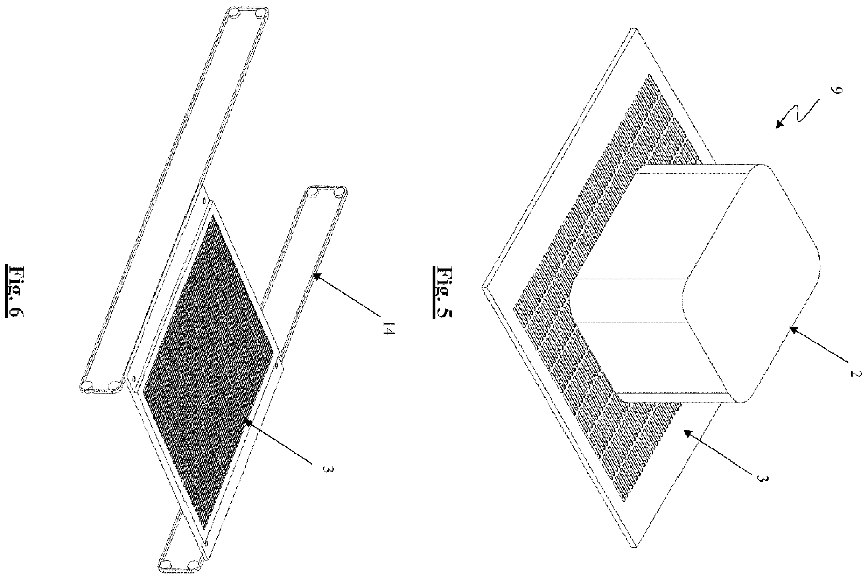

The printing platform 1 is preferably provided so as to produce assemblies 9 of objects 2 in large format, as can be seen in Figure 5, but may alternatively or additionally preferably be provided so as to produce assemblies 9 of objects 2 in a smaller format. The printing platform 1 further preferably comprises a nozzle extruder. The extruded material 4 applied with the aid of said nozzle extruder is preferably plastics material, and preferably more specifically a thermoplastic such as acrylonitrile butadiene styrene (ABS), polypropylene (PP), polyethylene (PE), high-density polyethylene (HDPE), polyether ether ketone (PEEK), polycarbonate (PC), polylactic acid (PLA), polyethylene terephthalate (PET) or polyethylene terephthalate glycol (PETG). In this case, the extruded material 4 may have never been previously used or processed, but may also have already been recycled. The extruded material 4 may be filled with, for example, fibres or filler, but may also be unfilled. As an alternative, the extruded material 4 may also be a liquid thermoset, and preferably more specifically resin, clay or concrete.

As can be seen in Figures 1 and 2, the counterpart element 6 preferably comprises projections 61 which, when the counterpart element 6 is fitted to or against the support surface 32 as in the figures, extend in the cavities 5 so as to guide the unhardened extruded material 4 to behind the securing edge 52. Preferably, each projection 61 further comprises an apex 62 which is provided closest to the access opening 51 to the cavity 5 and extends up to a distance A from said access opening 51. As an alternative, in the case that the cavity 5 were to be provided with multiple access openings 51 to the cavities 5, each projection 61 preferably comprises multiple separate apexes 62, which are each provided closest to a respective access opening 51 to the cavity 5 and extend up to a distance A from said access opening 51. Figures 1 and 2 show how said projections 61 comprise two smooth surfaces designed as a gable roof shape. Said projections 61 may, as in Figures 1 and 2, all be of identical construction, but may alternatively also differ from one another.

Each cavity 5 further preferably has at least one dimension which decreases from on the support surface 32 to on the holding surface 31. Figures 1 and 2 show how said dimension B of the cavities 5 decreases between B1 at the access opening 51 and B2 at the exit opening 53 such that conical barbs 7 can be formed in the cavities 5. The cavities 5 may, as in Figures 1 and 2, all be manufactured identically in the build plate 3, but may alternatively also differ from one another.

Figure 7 shows a diagram of a production facility 10 for producing an object 2 which is manufactured from layers of extruded material 4. The solid lines show the physical subsequent steps in the process and the dashed lines show the virtual subsequent steps in the process, in which data is transmitted. The production facility 10 comprises a printing platform 1 and one or more treatment means 8 in order to further treat the assembly 9 of the build plate 3 and the object 2. Said treatment means 8 may comprise a hand tool, but may alternatively also comprise an apparatus or a device. The printing platform 1 itself may also comprise said treatment means 8. Said treatment means 8 may operate manually or automatically. Said treatment means 8 may also be used to further treat the object 2 after it has been detached from the build plate 3, as can be seen in Figure 7. Said treatment means 8 may comprise a planing tool or cutting tool or chiselling tool in order to plane, cut or chisel away residual material that remains after the weakening of the barbs 7.

Preferably, the production facility 10 comprises conveying means 14 in order to move the build plate 3 from the printing platform 1 to one or more further treatment platforms 15 which each comprise one or more aforementioned treatment means 8. Said conveying means 14 may, as in Figure 6, comprise conveyor belts, but may alternatively also comprise, for example, gripping hooks, wheels or conveyor belts. Preferably, the build plate 3 is adapted so as to be moved by said conveying means 14, as can be seen in Figure 6. To this end, the build plate 3 is also preferably removable from the printing platform 1. This allows the build plate 3, with or without an object 2, to be removed from the printing platform 1 and possibly a second build plate 3 to be placed in the printing platform 1. Preferably, the build plate 3 is removable from and fittable to the printing platform 1 automatically, but this may alternatively also be effected manually. As an alternative, but less preferred, the assembly 9 is not moved.

The treatment means 8 of the production facility 10 further comprise a removal tool 81 in order to remove the extruded material 4, after hardening, from each cavity 5 such that the barbs 7 are weakened or removed. This allows the build plate 3 and the object 2 to be separated from one another, after which the build plate 3 can preferably be reused in the printing platform 1. When the extruded material 4 is a thermoset, the printing platform 1 or the treatment means 8 preferably further comprises a hardener in order to harden the extruded material 4 during printing. Said hardener may comprise, for example, a UV light. The removal tool 81 may comprise a milling tool, as can be seen in Figure 3, but may alternatively also comprise a drilling tool or melting tool. Just like all the other treatment means, said removal tool 81 may operate automatically or alternatively also manually.

The production facility 10 further preferably includes a scanning tool 11 in order to scan the build plate 3 in the assembly 9, a processing unit 12 in order to determine a reference coordinate system on the basis of the scanned build plate 3 and a control unit 13 for controlling the removal tool 81 on the basis of said reference coordinate system. Said control unit 13 may also control treatment means 8 which treat the assembly 9 on the basis of said reference coordinate system, as can be seen in Figure 7.

The removal tool 81 is preferably also provided so as to remove the extruded material 4 in each cavity 5 by the removal tool 81 being moved in the cavity 5 from the exit opening 53 to the entry opening 51 or entry openings 51, like the removal tool 81 in Figure 3. As an alternative, it is also possible to use a removal tool 81 which does not have to be moved in the cavity 5, for example a laser or a water jet cutter. The production facility 10 preferably further comprises limiting means and/or compensation means which respectively limit the removal tool 81 to a determined distance from the object 2 and/or adapt the removal tool 81 to the bending of the build plate 3. Said limiting means and/or compensation means may be controlled with the aid of the control unit. Said limiting means and/or compensation means may more specifically comprise a stop 16, as in Figure 7, which is provided on the removal tool 81 so as to strike against the build plate 3 during the movement of the removal tool 81, in order to limit the movement of the removal tool 81 in each cavity 5.

## Claims

1. Printing platform (1) for producing an assembly (9) of a build plate (3) and an object (2), wherein the printing platform (1) comprises said build plate (3), wherein said build plate (3):
• comprises a holding surface (31) for adding layers of extruded material (4) thereon via extrusion in order to form the object (2);
• and comprises cavities (5) which extend through the build plate (3), wherein each cavity (5) is provided with one or more access openings (51) in the holding surface (31), in order, when adding layers of extruded material (4) onto the holding surface (31), to fill the cavity (5) with unhardened extruded material (4) via said one or more access openings (51);
**characterized in that** each cavity (5) is also provided with a securing edge (52), and **in that** the printing platform (1) further comprises a counterpart element (6), wherein the printing platform (1) is provided so as to fit said counterpart element (6) to a support surface (32) of the build plate (3), on the opposite side from the holding surface (31), in order to at least partially close an exit opening (53) from the cavity (5) in the support surface (32) such that the unhardened extruded material (4) in the cavity (5) hooks behind the securing edge (52) and forms barbs (7).

2. Printing platform (1) according to Claim 1, **characterized in that** the counterpart element (6) comprises projections (61), wherein each projection (61) is provided so as to extend, when the counterpart element (6) is fitted to the support surface (32), in a said cavity (5) in order to guide the unhardened extruded material (4) to behind the securing edge (52).

3. Printing platform (1) according to Claim 2, **characterized in that** each projection (61) comprises one or more apexes (62) which, when the counterpart element (6) is fitted to the support surface (32), in said cavity (5) are provided closest to a said access opening (51) to the cavity (5), wherein said apexes (62) extend up to a distance (A) from said access opening (51).

4. Printing platform (1) according to one of the preceding claims, **characterized in that** each cavity (5), as seen in cross section parallel to the holding surface (31), has at least one dimension (B) which decreases from on the support surface (32) to on the holding surface (31).

5. Printing platform (1) according to one of the preceding claims, **characterized in that** the cavities (5) are of slot-like design.

6. Printing platform (1) according to one of the preceding claims, **characterized in that** the build plate (3) is removable from the printing platform (1).

7. Printing platform (1) according to one of the preceding claims, **characterized in that** the counterpart element (6) is designed as a counterpart plate (6).

8. Production facility (10) for producing an object (2) which is manufactured from layers of extruded material (4), **characterized in that** the production facility (10) comprises a printing platform (1) according to one of the preceding claims, further comprises one or more treatment means (8) in order to further treat the assembly of the build plate (3) and the object (2), and wherein the treatment means (8) comprise a removal tool (81) in order to remove the extruded material (4), after hardening, from each cavity (5) such that the barbs (7) are weakened or removed.

9. Production facility (10) according to claim 8, **characterized in that** the treatment means (8) further comprise a scanning tool (11) in order to scan the build plate (3), and **in that** the production facility (10) further comprises a processing unit (12) in order to determine a reference coordinate system on the basis of the scanned build plate (3) and further comprises a control unit (13) for controlling the removal tool (81) on the basis of said reference coordinate system.

10. Production facility (10) according to one of Claims 8 to 9, **characterized in that** the removal tool (81) is provided so as to remove the extruded material (4), after hardening, in each cavity (5) by the removal tool (81) being moved in the cavity (5) from the exit opening (53) to the one or more access openings (51) such that the barbs (7) are weakened or removed and the object (2) detaches from the build plate (3).

11. Production facility (10) according to Claim 10, **characterized in that** the production facility (10) further comprises limiting means in order to limit the movement of the removal tool (81) in the cavities (5).

12. Production facility (10) according to Claim 11, **characterized in that** the limiting means comprise a stop (16) which is provided on the removal tool (81) so as to strike against the build plate (3) during the movement of the removal tool (81), in order to limit the movement of the removal tool (81) in each cavity (5).

13. Production facility (10) according to one of Claims 8 to 12, **characterized in that** the production facility (10) further comprises conveying means (14) in order to move the build plate (3) from the printing platform (1) to a treatment platform (15) which comprises one or more aforementioned treatment means (8).

14. Method for producing an assembly (9) of a build plate (3) and an object (2) which is manufactured via extrusion through the addition of layers of extruded material (4), **characterized in that** the assembly (9) is produced with the aid of a printing platform (1) according to one of Claims 1 to 7.

15. Method for producing an object (2) which is manufactured from layers of extruded material (4), **characterized in that** said method comprises:
a. producing an assembly (9) of a build plate (3) and an object (2), by a method according to Claim 14; and
b. detaching the object (2) from the build plate (3) in a production facility (10) according to one of Claims 8 to 13, by weakening or removing the barbs (7) via the exit openings (53) with the aid of the removal tool (81).
